# EUROPÄISCHE PATENTANMELDUNG

(11) **EP 3 929 095 A1**
(43) Veröffentlichungstag der Anmeldung: **29.12.2021**
(21) Anmeldenummer: 21163310.2
(22) Anmeldetag: 18.03.2021
(51) Int. Cl.: B65C 9/04

(54) **ETIKETTIERVORRICHTUNG MIT BEHÄLTERBODENNACHKÜHLUNG**

(30) Priorität: 24.06.2020 DE 102020207833
(71) Anmelder: Krones AG, 93073 Neutraubling (DE)
(72) Erfinder: BODENSTEINER, Christian, 93073 Neutraubling (DE); HAUSLADEN, Wolfgang, 93073 Neutraubling (DE); SCHROLL, Bernd, 93073 Neutraubling (DE); TECKENBERG, Veronika, 93073 Neutraubling (DE)
(74) Vertreter: Grünecker Patent- und Rechtsanwälte PartG mbB

(57) **Zusammenfassung**

Etikettiervorrichtung (2) zum Etikettieren von zu füllenden Behältern , die eine Vorrichtung (23-27, 44) zum Kühlen der Behälterböden der Behälter umfasst, die dazu ausgebildet ist, den Behälterböden der Behälter ein Gas zuzuführen, bereit. Weiterhin wird ein Verfahren zur Bodennachkühlung von Behältern in einer Abfüllanlage (10) mit den Schritten des Transportierens der Behälter von einer Formblasvorrichtung (1) der Abfüllanlage zu einer Etikettiervorrichtung (2) der Abfüllanlage und des Kühlens der Behälterböden der Behälter in der Etikettiervorrichtung (2) durch Zuführen eines Gases zu den Behälterböden.

## Beschreibung

### Gebiet der Erfindung

Die vorliegende Erfindung betrifft eine Etikettiervorrichtung zum Etikettieren von Behältern, die eine Einrichtung zum Kühlen der zu etikettierenden Behälter aufweist.

### Stand der Technik

In Behälterbehandlungsanlagen werden Behälter, wie beispielsweise Flaschen, Dosen, usw., in mehreren aufeinanderfolgenden Prozessschritten behandelt. Dabei werden im Allgemeinen die Prozessschritte in separaten Behandlungsstationen durchgeführt, die beispielsweise als Module eines gemeinsamen Anlagenkonzepts zusammengestellt werden können. Eine Behälterbehandlungsanlage für Glasflaschen oder Kunststoffflaschen, z. B. aus Polyethylenterephthalat (PET), Polypropylen (PEP), usw., kann beispielsweise eine Blasformeinrichtung, Füllvorrichtung, Verschließvorrichtung, Etikettiervorrichtung, Verpackungsvorrichtung, Reinigungsvorrichtung, Sterilisationsvorrichtung, Inspektionsvorrichtung, usw. als separate, modular ausgeführte Behandlungsstationen umfassen. Die einzelnen Behandlungsstationen, welche aufeinanderfolgende Prozessschritte durchführen, sind dabei im Allgemeinen in Reihe hintereinander geschaltet, wobei eine oder mehrere Transportvorrichtungen den Transport der Behälter von den Behandlungsstationen zu den jeweiligen nachgeschalteten Behandlungsstationen übernehmen.

Zu befüllende Behälter, die direkt aus einer Blasformvorrichtung kommen, weisen noch einen Wärmeüberschuss auf. Dies gilt vor allem für den Bodenbereich, dort insbesondere für den Anspritzpunkt und die Zugbänder, wobei letztere vor allem bei sog. Petaloid-Böden die Bereiche zwischen den Standfüßen des Bodenbereichs bezeichnen, und der Bereich des Flaschenhalses. Im Bereich des Bodens wird die Formstabilität beeinträchtig und im Flaschenhals die Ausrichtung der Flasche. Die Zugbänder befinden sich im Bodenbereich des Behälters und erstrecken sich auch noch in die Mantelfläche desselben, um die Stabilität für den gesamten Behälter zu erhalten. Somit müssen zumindest die Bereiche der Flasche, zumal wenn sie eine relativ große Dicke aufweisen, aktiv gekühlt werden. Andernfalls könnten sich die Behälter beim Transport zur Füll- beziehungsweise Etikettiervorichtung rückformen oder während eines Vorspannens (Beaufschlagens des Behälters mit einem unter Druck gesetzten Gas) beim Etikettieren (beispielsweise mit etwa 0,8 bar) oder beim Füllen (beispielsweise mit etwa 6 bar) ausbeulen oder verziehen. Zukünftige Steigerungen der Stationsleistung können weitere Bereiche zur Kühlung notwendig machen.

Im Stand der Technik ist es insbesondere in verblockten Anlagen bekannt, die Behälterböden zwischen einer Streckblasvorrichtung und einer Etikettiervorrichtung mit einem Gebläse zu kühlen und sie zwischen der Etikettiervorrichtung und einer Füllvorrichtung mit mittels unterhalb des Behältertransportwegs angeordneten Düsen aufgebrachten Wasser zu kühlen.

Die bekannten Mittel zum Kühlen der Behälterböden sind jedoch komplex im Aufbau und wartungsintensiv. Zudem wird die Baugröße durch die benötigten Gebläse- und Wasserkühlungssterne erhöht. Aus hygienischen Gründen ist eine mögliche Wasserverschleppung aus der Wasserkühlung heraus problematisch.

Es liegt der vorliegenden Erfindung die Aufgabe zugrunde, eine im Vergleich zum Stand der Technik vereinfachte, verlässlichere und effizientere Bodennachkühlung von zu etikettierenden und füllenden Behältern bereitzustellen.

### Beschreibung der Erfindung

Die oben genannte Aufgabe wird durch Bereitstellen einer Etikettiervorrichtung in einer Abfüllanlage (Behälterbehandlungsanlage) zum Etikettieren von zu füllenden (Kunststoff)Behältern (beispielsweise PET-Flaschen) gelöst, die eine Vorrichtung zum Kühlen der Behälterböden der Behälter umfasst, die dazu ausgebildet ist, den Behälterböden der Behälter ein Gas (beispielsweise Luft) zuzuführen.

Erfindungsgemäß findet also in der Etikettiervorrichtung eine aktive Kühlung der Behälterböden der (Kunststoff)Behälter statt, wobei die Kühlung beispielsweise nach dem Etikettierungsvorgang erfolgen kann. Somit wird eine Zeitspanne zwischen erfolgter Etikettierung und Verlassen der Etikettiervorrichtung zum Kühlen genutzt. Das Kühlen kann hierbei so effizient ausgebildet sein, dass eine nachfolgende Wasserkühlung vor dem Vorspannen der Behälter in einer Füllvorrichtung zum Füllen der etikettierten Behälter nicht mehr notwendig ist oder doch zumindest hinsichtlich der Kühlzeit, Wassermenge und Kühle des Kühlwassers gegenüber dem Stand der Technik reduziert vorgenommen werden kann. Insbesondere erfordert das Vorsehen einer Vorrichtung zum Kühlen der Behälterböden der Behälter innerhalb der Etikettiervorrichtung keine aufwändigen konstrukturellen Maßnahmen (siehe auch Beschreibung unten) und führt zu keinem zusätzlichen Platzbedarf.

Gemäß einer Weiterbildung umfasst die Vorrichtung zum Kühlen der Behälterböden sich drehende Standteller zum Transportieren der Behälter in der Etikettiervorrichtung, wobei die Standteller jeweils zumindest eine Öffnung aufweisen, durch die das Gas den Behälterböden zu geführt werden kann. Die Behälter werden in der Etikettiervorrichtung auf diesen Standtellern transportiert. Für die Etikettierung sind die Standteller drehbar antreibbar. Wenn die Standteller in Drehung versetzt werden, beispielsweise vor oder nach dem eigentlichen Etikettiervorgang, kann prinzipiell Luft durch die in den Standtellern vorgesehenen Öffnungen den Behälterböden der auf den Standtellern stehenden Behälter zugeführt werden.

Beispielsweise kann die Vorrichtung zum Kühlen der Behälterböden für jeden sich drehenden Standteller jeweils einen angetriebenen Ventilator umfassen, der dazu ausgebildet ist, das Gas durch die zumindest eine Öffnung in dem Standteller dem jeweiligen Behälterboden zuzuführen. Mithilfe von Ventilatoren kann eine Bodennachkühlung sehr effizient erreicht werden. Der Antrieb der Ventilatoren kann hierbei auf verschiedene Weisen ausgebildet sein. So kann jeder Ventilator durch den jeweiligen dem Standteller zugeordneten Antrieb zum Drehen des Standtellers angetrieben werden. Auch kann die durch den jeweiligen dem Standteller zugeordneten Antrieb verursachte Drehung des jeweiligen Standtellers zum Antreiben der Ventilatoren Verwendung finden. Gemäß einer weiteren Alternative weist jeder der Ventilatoren seinen separaten eigenen Antrieb auf.

Anstelle der Ventilatoren können für jeden Standteller ein oder mehrere (passive) Schaufelräder vorgesehen werden. Gemäß einer weiteren Weiterbildung umfasst somit die Vorrichtung zum Kühlen der Behälterböden für jeden sich drehenden Standteller zumindest ein Schaufelrad, über das das Gas dem jeweiligen Behälterboden zugeführt wird. Die Geometrie sollte dabei so gewählt sein, dass mindestens die Zugbänder des Behälters, insbesondere aber der gesamte Bodenbereich von der Luftströmung erfasst wird. Es kann hierbei für jede der zumindest einen Öffnung im Standteller jeweils eine eigenes Schaufelrad vorgesehen sein. Die Schaufelräder sind fest an der Unterseite der Standteller (die Behälter werden auf der Oberseite der Standteller stehend transportiert) angeordnet. Insbesondere drehen sich die Schaufelräder nicht relativ zu den jeweiligen Standtellern. Bei Drehung der Standteller erfassen die Schaufelräder die umgebende Luft und führen diese durch die Öffnungen in den Standtellern den Behälterböden zur Kühlung derselben zu.

In den oben beschriebenen Beispielen kann die erfindungsgemäße Bodennachkühlung in der Etikettiervorrichtung durch eine Zufuhr von Luft durch Öffnungen in den zu Transport verwendeten Standtellern erfolgen. Diese Art der Bodennachkühlung in der Etikettiervorrichtung stellt jedoch nicht die einzige Möglichkeit dar. Die Etikettiervorrichtung kann eine Druckluftzuführvorrichtung zum Vorspannen der zu etikettierenden Behälter mit Luft oder einem anderen Gas und eine Steuerungseinheit zum Steuern des Betriebs der Druckluftzuführvorrichtung umfassen. Hierbei kann nun die Steuerungseinheit dazu ausgebildet sein, die Druckluftzuführvorrichtung dazu zu veranlassen, nach dem Etikettiervorgang der Behälter jeweils mehrere Druckluftstöße in jeden der Behälter auszuführen. Das durch die Druckluftstöße in die Behälter eingeführte Gas trifft insbesondere auf die Behälterböden, verwirbelt in den Behältern und transportiert beim Austritt aus den Behältern Wärme ab. Die Verwendung einer im Allgemeinen zum Vorspannen ohnehin bereitgestellter Druckluftzuführvorrichtung der Etikettiervorrichtung zur Bodennachkühlung stellt eine kostengünstige und einfach zu realisierende Variante der Lösung der oben genannten Aufgabe dar. Die neue Idee ist von Vorteil, da die komplette Innenfläche der Flasche umströmt wird, bei zukünftigen Steigerungen der Stationsleistung. Prinzipiell kann auch eine zusätzliche Druckluftzuführvorrichtung vorgesehen sein, die ausschließlich zur Bodennachkühlung angesteuert wird

Weiterhin wird eine Behälterbehandlungsanlage (Abfüllanlage) mit einer Formblasvorrichtung zum Formen von Behältern aus Vorformlingen, einer Etikettiervorrichtung gemäß einer der oben beschriebenen Weiterbildungen, die stromabwärts von der Formblasvorrichtung angeordnet ist, und einer Füllvorrichtung zum Füllen der (etikettierten) Behälter, die stromabwärts von der Etikettiervorrichtung angeordnet ist, bereitgestellt, wobei insbesondere die Formblasvorrichtung, die Etikettiervorrichtung und die Füllvorrichtung verblockt sein können.

Die oben genannte Aufgabe wird auch durch Bereitstellen eines Verfahrens zur Bodennachkühlung von (Kunststoff)Behältern in einer Abfüllanlage gelöst, wobei das Verfahren die Schritte des Transportierens der Behälter von einer Formblasvorrichtung der Abfüllanlage zu einer Etikettiervorrichtung der Abfüllanlage und des Kühlens der Behälterböden der Behälter in der Etikettiervorrichtung durch Zuführen eines Gases zu den Behälterböden umfasst. Das Kühlen kann zumindest teilweise vor und/oder nach dem Etikettieren erfolgen.

Das Verfahren kann weiterhin das Transportieren der Behälter in der Etikettiervorrichtung auf Standtellern (für jeden Behälter ist ein Standteller vorgesehen) umfassen, wobei jeder der Standteller zumindest eine Öffnung aufweist, und wobei das Zuführen des Gases zu den Behälterböden der Behälter durch die Öffnungen der Standteller erfolgt. Hierbei kann das Gas (etwa die Umgebungsluft) durch Ventilatoren den Behälterböden durch die Öffnungen der Standteller hindurch zugeführt werden, wobei jedem der Standteller ein eigener Ventilator zugeordnet sein kann. Gemäß einer anderen Weiterbildung können die Standteller in Drehung versetzt werden, wobei das Gas während der Drehung der Standteller durch fest mit den Standtellern verbundene Schaufelräder (etwa die Umgebungsluft) den Behälterböden durch die Öffnungen der Standteller hindurch zugeführt wird.

Gemäß einer alternativen Weiterbildung umfasst das erfindungsgemäße Verfahren zur Bodennachkühlung von (Kunststoff)Behältern in einer Abfüllanlage weiterhin ein Vorspannen der Behälter in der Etikettiervorrichtung mithilfe einer Druckluftzuführvorrichtung (die Druckluft oder ein anderes unter Druck gesetztes Gas bereitstellt) und ein Etikettieren der vorgespannten Behälter, wobei das Zuführen des Gases zu den Behälterböden das Ausführen von Druckluftstößen in jeden der etikettierten Behälter mithilfe der Druckluftzuführvorrichtung umfasst.

In sämtlichen oben genannten Weiterbildungen des erfindungsgemäßen Verfahrens können die Behälter von der Etikettiervorrichtung zu einer Füllvorrichtung der Abfüllanlage auf einer Transportstrecke transportiert werden und entweder umfasst das Verfahren das Ausführen einer weiteren Bodennachkühlung der Behälter auf der Transportstrecke, insbesondere mit Wasser, oder es ist keine weitere Bodennachkühlung der Behälter auf der Transportstrecke notwendig, wenn die Bodennachkühlung in der Etikettiervorrichtung bereits hinreichend effizient durchgeführt wird.

Weitere Merkmale und beispielhafte Ausführungsformen sowie Vorteile der vorliegenden Erfindung werden nachfolgend anhand der Zeichnungen näher erläutert. Es versteht sich, dass die Ausführungsformen nicht den Bereich der vorliegenden Erfindung erschöpfen. Es versteht sich weiterhin, dass einige oder sämtliche der im weiteren beschriebenen Merkmale auch auf andere Weise miteinander kombiniert werden können.
Figur 1 zeigt einen Teil einer Abfüllanlage, in der eine erfindungsgemäße Etikettiervorrichtung eingesetzt werden kann.
Figuren 2a und 2b zeigen beispielhafte Vorrichtungen für eine Bodennachkühlung in einer Etikettiervorrichtung mithilfe von durch Öffnungen in zum Transport der Behälter innerhalb der Etikettiervorrichtung vorgesehenen Standtellern durch Ventilatoren zugeführter Luft.
Figur 3 ist ein Flussdiagramm, das eine Ausführungsform eines Verfahrens zur Bodennachkühlung in einer Etikettiervorrichtung mithilfe der in den Figuren 2a und 2b gezeigten Vorrichtungen zeigt.
Figur 4a und 4b zeigen eine beispielhafte Vorrichtung für eine Bodennachkühlung in einer Etikettiervorrichtung mithilfe von durch Öffnungen in zum Transport der Behälter innerhalb der Etikettiervorrichtung vorgesehenen Standtellern durch Schaufelräder zugeführter Luft.
Figur 5 ist ein Flussdiagramm, das eine Ausführungsform eines Verfahrens zur Bodennachkühlung in einer Etikettiervorrichtung mithilfe der in den Figuren 4a und 4b gezeigten Vorrichtung zeigt.
Figur 6 zeigt eine beispielhafte Vorrichtung für eine Bodennachkühlung in einer Etikettiervorrichtung mithilfe von Druckluft.
Figur 7 ist ein Flussdiagramm, das eine Ausführungsform eines Verfahrens zur Bodennachkühlung in einer Etikettiervorrichtung mithilfe der in der Figur 6 gezeigten Vorrichtung zeigt.

Die vorliegende Erfindung stellt eine Etikettiervorrichtung mit integrierter Behälterbodennachkühlung bereit. Die Kühlung der Böden der Behälter, insbesondere Kunststoffflaschen, in der Etikettiervorrichtung erfolgt mit Luft oder einem anderen Gas.

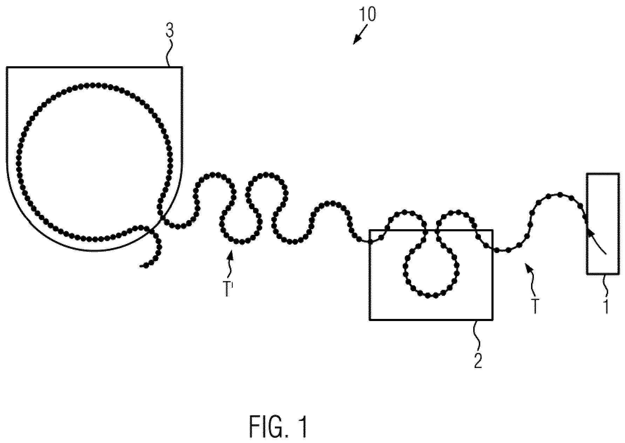

Figur 1 zeigt einen Ausschnitt einer Abfüllanlage 10 mit einer Formblasvorrichtung 1, einer erfindungsgemäßen Etikettiervorrichtung 2 und einer Füllvorrichtung 3. In der Formblasvorrichtung 1 werden (Kunststoff)Behälter aus Vorformlingen ausgebildet. Die ausgebildeten Behälter werden über entsprechende Transportsterne T stromabwärts zu der Etikettiervorrichtung 2 transportiert. Auf dieser Transportstrecke erfolgt eine erste Bodennachkühlung mithilfe eines Gebläses, wie es auch aus dem Stand der Technik bekannt ist.

In der Etikettiervorrichtung 2 werden die Behälter, die beispielsweise auf einem Karussell innerhalb der Etikettiervorrichtung 2 transportiert werden, etikettiert. Weiterhin erfolgt erfindungsgemäß in der Etikettiervorrichtung 2 eine weitere Bodennachkühlung. Von der Etikettiervorrichtung 2 werden die etikettierten Behälter über weitere Transportsterne T' einer weiteren Transportstrecke stromabwärts zu der Füllvorrichtung 3 transportiert, in der die etikettierten Behälter beispielsweise auf einem Karussell transportiert und gefüllt werden. Beispielsweise werden in der Füllvorrichtung 3 Kunststoffflaschen mit einem Getränk gefüllt. Auf der weiteren Transportstrecke zwischen der Etikettiervorrichtung 2 und der Füllvorrichtung 3 kann eine weitere Bodennachkühlung mithilfe von Wasser erfolgen, wie es auch aus dem Stand der Technik bekannt ist, sofern dieses noch notwendig ist.

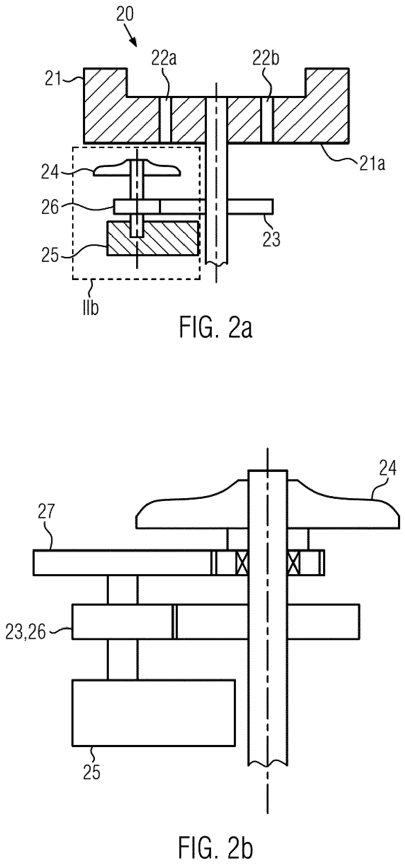

Während des Transports innerhalb der Etikettiervorrichtung 2 stehen die Behälter auf drehbaren Standtellern. Die erfindungsgemäße Bodennachkühlung kann gemäß einer Ausführungsform durch Zuführen von Luft durch Öffnungen in den Standtellern erfolgen. Ein Beispiel für eine Vorrichtung 20 zum Kühlen der Behälterböden der Behälter durch Zuführen von Luft durch Öffnungen in den Standtellern ist in den Figuren 2a und 2b gezeigt. In Figur 2a ist ein Standteller 21 zum Transport eines Behälters innerhalb einer Etikettiervorrichtung, beispielsweise der in Figur 1 gezeigten Etikettiervorrichtung 2, gezeigt. Der Standteller 21 weist in seinem Boden 21a Schlitze 22a und 22b auf. Der Standteller 21 kann über einen Antrieb 23 in Drehung versetzt werden.

Unterhalb des Standtellers 21 ist ein Ventilator 24 angeordnet, der dazu dient, Luft durch die Schlitze 22a und 22b des Standtellers 21 dem Boden eines auf dem Standteller 21 transportierten Behälters zuzuführen und dadurch diesen zu kühlen. Wenn sich der Standteller 21 dreht, kann durch den positionsfesten Ventilator 24 der gesamte Behälterboden des auf dem Standteller 21 transportierten Behälters über die Schlitze 22a und 22b gekühlt werden.

Der Ventilator 24 ist drehbar in einem fest montierten Lagerelement 25 gelagert. Der Ventilator 24 kann durch einen eigenen Antrieb 26 (etwa einen Servomotor) oder auch durch den Antrieb (etwa einen Servomotor) des Standtellers 23 angetrieben werden. Gemäß einer weiteren alternativen Ausführungsform kann der Ventilator 24 durch den sich drehenden Standteller 21 beispielsweise über einen Riemenantrieb angetrieben werden. Wie es in Figur 2b gezeigt ist, kann eine gesteuerte/geregelte Übersetzung 27 vorgesehen sein, um variable beziehungsweise insbesondere höhere Drehzahlen des Ventilators, wenn dieser von dem Antrieb 23 des Standtellers angetrieben wird, zu erreichen.

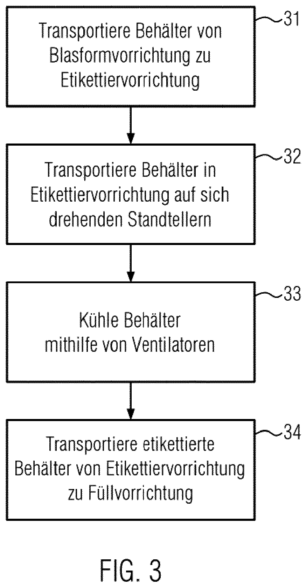

Eine Ausführungsform eines Verfahrens zur Bodennachkühlung in einer Etikettiervorrichtung, beispielsweise der in Figur gezeigten Etikettiervorrichtung 2, mithilfe der in den Figuren 2a und 2b gezeigten Vorrichtungen ist in dem Flussdiagramm von Figur 3 veranschaulicht. Behälter werden von einer Blasformvorrichtung, beispielsweise der in Figur 1 gezeigten Blasformvorrichtung 1, zu einer Etikettiervorrichtung, beispielsweise der in Figur 1 gezeigten Etikettiervorrichtung 2, transportiert 31. Innerhalb der Etikettiervorrichtung werden die Behälter insbesondere zur Etikettierung auf sich drehenden Standtellern, beispielsweise der in den Figuren 2a und 2b gezeigten Art, transportiert 32.

Während des Transports auf den sich drehenden Standtellern werden die Böden der Behälter mithilfe von unterhalb der Standteller angeordneten Ventilatoren, beispielsweise mithilfe der in den Figuren 2a und 2b gezeigten Art von Ventilatoren 24, gekühlt 33. Prinzipiell kann diese Kühlung der Böden vor und/oder während und/oder nach dem Etikettiervorgang durchgeführt werden. Eine Kühlung des Behälters ist insbesondere möglich so lange der Behälter auf dem Standteller steht. Die so nachgekühlten und etikettierten Behälter werden dann von der Etikettiervorrichtung zu einer Füllvorrichtung, beispielsweise der in Figur 1 gezeigten Füllvorrichtung 3, transportiert 34. Der Transport zu der Füllvorrichtung kann etwa über die in Figur 1 gezeigten Transportsterne T' erfolgen. Während dieses Transports kann, soweit nötig, eine weitere Bodennachkühlung mithilfe von gekühltem Wasser/Luft ausgeführt werden.

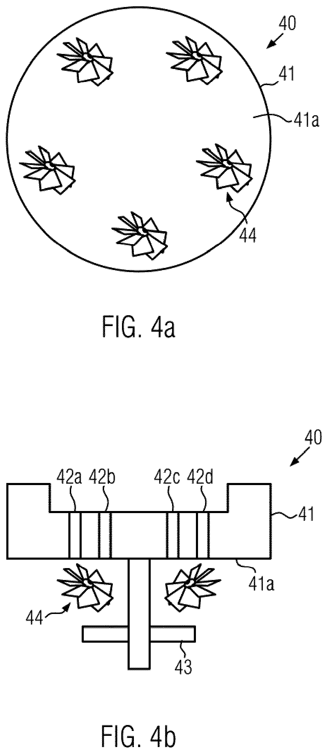

Eine alternative Ausführung einer Vorrichtung 40 zum Kühlen von Behälterböden von Behältern in einer erfindungsgemäßen Etikettiervorrichtung ist in Figur 4 gezeigt. Ein Standteller 41 dient dem Transport eines Behälters innerhalb einer Etikettiervorrichtung, beispielsweise der in Figur 1 gezeigten Etikettiervorrichtung 2. Der Standteller 41 weist in seinem Boden 41a Schlitze 42a, 42b, 42c und 42d auf. Der Standteller 41 kann über einen Antrieb 43 in Drehung versetzt werden.

An der Unterseite des Bodens 21a^{u} sind Schaufelräder 44, beispielhaft fünf Schaufelräder 44, fest montiert. Die Geometrie sollte dabei so sein, dass zumindest der Bodenbereich der Behälter, insbesondere aber auch der Übergang vom Bodenbereich in die Mantelfläches des Behälters von der Luftströmung erfasst wird. Die Schaufelräder 44 drehen sich relativ zu dem Standteller 41 nicht. Wenn der Standteller 41 durch den Antrieb 43 in Drehung versetzt wird, wird Umgebungsluft von den Schaufelrädern 44 von der Seite angezogen und aufgrund eines geeignet gewählten Schraubengangs nach oben durch die Schlitze 42a, 42b, 42c und 42d dem Behälterboden des auf dem Standteller 41 transportierten Behälters zur Kühlung zugeführt.

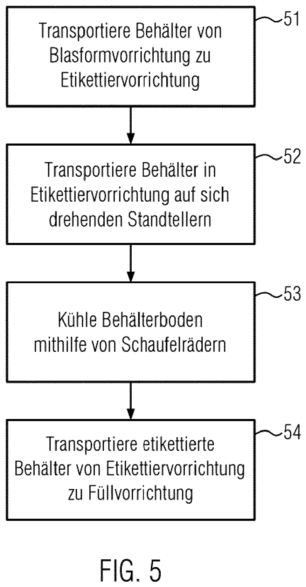

Eine Ausführungsform eines Verfahrens zur Bodennachkühlung in einer Etikettiervorrichtung, beispielsweise der in Figur gezeigten Etikettiervorrichtung 2, mithilfe der in den Figuren 4a und 4b gezeigten Vorrichtung ist in dem Flussdiagramm von Figur 5 veranschaulicht. Behälter werden von einer Blasformvorrichtung, beispielsweise der in Figur 1 gezeigten Blasformvorrichtung 1, zu einer Etikettiervorrichtung, beispielsweise der in Figur 1 gezeigten Etikettiervorrichtung 2, transportiert 51. Innerhalb der Etikettiervorrichtung werden die Behälter insbesondere zur Etikettierung auf sich drehenden Standtellern, beispielsweise Standtellern der in den Figuren 4a und 4b gezeigten Art, transportiert 52.

Während des Transports auf den sich drehenden Standtellern werden die Böden der Behälter mithilfe von an der Unterseite des Bodens der Standteller angeordneten und sich selbst nicht um ihre Rotorachse drehenden Schaufelrädern, beispielsweise mithilfe der in den Figuren 4a und 4b gezeigten Art von Schaufelrädern 44, gekühlt 53. Prinzipiell kann diese Kühlung der Böden vor und/oder während und/oder nach dem Etikettiervorgang durchgeführt werden. Die so nachgekühlten und etikettierten Behälter werden dann von der Etikettiervorrichtung zu einer Füllvorrichtung, beispielsweise der in Figur 1 gezeigten Füllvorrichtung 3, transportiert 54. Der Transport zu der Füllvorrichtung kann etwa über die in Figur 1 gezeigten Transportsterne T' erfolgen. Während dieses Transports kann, soweit nötig, eine weitere Bodennachkühlung mithilfe von gekühltem Wasser ausgeführt werden.

Gemäß einer weiteren Ausführungsform erfolgt die Bodennachkühlung in der Etikettiervorrichtung nicht über Öffnungen in den zum Transport der Behälter in der Etikettiervorrichtung verwendeten Standteller, sondern mithilfe eines in die Behälter eingeführten unter Druck stehenden Gases. Die Etikettiervorrichtung, beispielsweise die Etikettiervorrichtung 2, die in Figur 1 gezeigt ist, kann eine Druckluftzuführvorrichtung umfassen. Mithilfe dieser Druckluftzuführvorrichtung werden eingespannte zu etikettierende Behälter mit einem Druckgas, beispielsweise mit Druckluft, das gereinigt ist, beispielsweise bei etwa 0,5 bis 0,8 bar, vorgespannt.

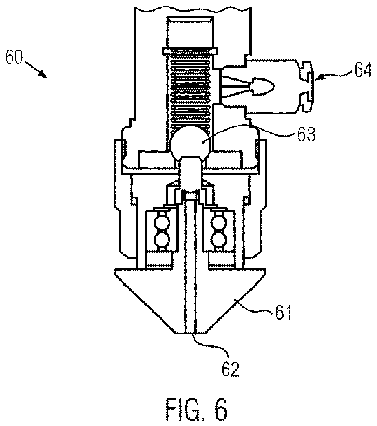

In Figur 6 ist eine geeignete Druckluftzuführvorrichtung 60 gezeigt, die auch zur Bodennachkühlung Verwendung finden kann. Beim Einspannen eines Behälters zum Vorspannen desselben (Beaufschlagen des Behälters mit einem unter Druck gesetzten Gas) fährt eine Zentrierglocke 61 der Druckluftzuführvorrichtung 60 von oben über eine Hubkurve nach unten, während ein Standteller, etwa der in den Figuren 2a und 2b gezeigte Standteller 21 oder der in den Figuren 4a und 4b gezeigte Standteller 41, über eine Hubkurve nach oben gefahren wird. Die Druckluftzuführvorrichtung 60 kann eine Hülse (nicht in Figur 6 gezeigt) zum Fassen eines Halses einer zu etikettierenden Flasche aufweisen. Im eingespannten Zustand dichtet die Zentrierglocke 61 eine Behälteröffnung (etwa einen Flaschenhals) zum Vorspannen ab.

Beim Einspannvorgang wird eine Kugel 63 nach oben geschoben, wodurch ein über einen Druckgasleinlass 64 der Druckluftzuführvorrichtung 60 bereitgestelltes Druckgas, beispielsweise Druckluft, durch den Zentrierglockenkanal 62 in den zu etikettierenden Behälter strömen kann. Der vorgespannte Behälter wird sodann etikettiert. Nach der Beendigung des Etikettiervorgangs und bis zum Ausleiten des etikettierten Behälters kann der etikettierte Behälter Druckluftzuführvorrichtung 60 einer Bodennachkühlung durch stoßartige Abgabe des Druckgases nach zumindest teilweiser Lösung der Zentrierglocke 61 unterzogen werden.

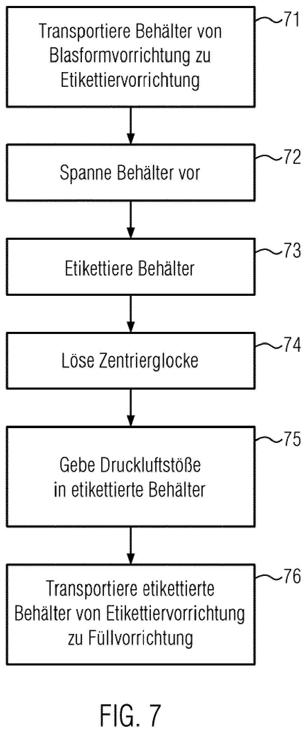

Ein mithilfe der Druckluftzuführvorrichtung 60 ausführbares Verfahren zur Bodennachkühlung in einer Etikettiervorrichtung, beispielsweise der in Figur gezeigten Etikettiervorrichtung 2, mithilfe der in Figur 6 gezeigten Vorrichtung ist in dem Flussdiagramm der Figur 7 veranschaulicht. Behälter werden von einer Blasformvorrichtung, beispielsweise der in Figur 1 gezeigten Blasformvorrichtung 1, zu einer Etikettiervorrichtung, beispielsweise der in Figur 1 gezeigten Etikettiervorrichtung 2, transportiert 71.

In der Etikettiervorrichtung werden die Behälter vor dem Etikettieren mithilfe von einer Druckluftzuführvorrichtung, beispielsweise der in Figur 6 gezeigten Druckluftzuführvorrichtung 60, nach Einspannen mithilfe einer Zentrierglocke der Druckluftzuführvorrichtung vorgespannt 72. Die vorgespannten Behälter werden etikettiert 73.

Nach dem Etikettiervorgang wird die Zentrierglocke der Druckluftzuführvorrichtung zumindest teilweise gelöst 74. Nach dem Lösen der Zentrierglocke der Druckluftzuführvorrichtung wird die Druckluftzuführvorrichtung so gesteuert, dass sie eine Anzahl an Druckluftstöße von gefilterter Luft (oder einem anderen Gas wie gekühltem Stickstoff) in den etikettierten Behälter abgibt 75. Die verwirbelte Luft verlässt den Behälter wieder und transportiert dabei Wärme insbesondere von den Behälterböden ab. Die so abgekühlten, etikettierten Behälter werden schließlich von der Etikettiervorrichtung zu einer Füllvorrichtung, beispielsweise der in Figur 1 gezeigten Füllvorrichtung 3, transportiert 54. Der Transport zu der Füllvorrichtung kann etwa über die in Figur 1 gezeigten Transportsterne T' erfolgen. Während dieses Transports kann, soweit nötig, eine weitere Bodennachkühlung mithilfe von gekühltem Wasser ausgeführt werden.

In sämtlichen oben beschriebenen Ausführungsformen wird der gesamte Aufbau der Abfüllanlage durch die erfindungsgemäße Bodennachkühlung nicht vergrößert. Die Bodennachkühlung kann einfach und effizient durch Zuführen einer zum Kühlen verwendeten Luft oder eines anderes Gases ausgeführt werden.

## Patentansprüche

1. Etikettiervorrichtung zum Etikettieren von zu füllenden Behältern, die eine Vorrichtung zum Kühlen der Behälterböden der Behälter umfasst, die dazu ausgebildet ist, den Behälterböden der Behälter ein Gas zuzuführen.

2. Die Etikettiervorrichtung gemäß Anspruch 1, in der die Vorrichtung zum Kühlen der Behälterböden sich drehende Standteller zum Transportieren der Behälter in der Etikettiervorrichtung umfasst und wobei die Standteller jeweils zumindest einen Öffnung aufweisen, durch die das Gas den Behälterböden zugeführt wird.

3. Die Etikettiervorrichtung gemäß Anspruch 2, in der die Vorrichtung zum Kühlen der Behälterböden für jeden sich drehenden Standteller jeweils einen angetriebenen Ventilator umfasst, der dazu ausgebildet ist, das Gas durch die zumindest eine Öffnung in dem Standteller dem jeweiligen Behälterboden eines auf dem Standteller transportierten Behälters zuzuführen.

4. Die Etikettiervorrichtung gemäß Anspruch 3, in der
jeder Standteller mit einem Antrieb zum Drehen des Standtellers versehen ist; und
jeder einem jeweiligen Standteller zugeordnete Ventilator
a) durch den jeweiligen Antrieb des jeweiligen Standtellers angetrieben wird; oder
b) durch die durch den Antrieb des jeweiligen Standtellers verursachte Drehung des jeweiligen Standtellers angetrieben wird; oder
c) jeweils durch einen separaten eigenen Antrieb angetrieben wird.

5. Die Etikettiervorrichtung gemäß Anspruch 2, in der die Vorrichtung zum Kühlen der Behälterböden für jeden sich drehenden Standteller zumindest ein Schaufelrad umfasst, insbesondere jeweils für jede der zumindest einen Öffnung im Standteller ein Schaufelrad umfasst, über das das Gas dem jeweiligen Behälterboden zugeführt wird.

6. Die Etikettiervorrichtung gemäß Anspruch 1, in der die Vorrichtung zum Kühlen der Behälterböden umfasst
eine Druckluftzuführvorrichtung zum Vorspannen der zu etikettierenden Behälter; und
eine Steuerungseinheit zum Steuern des Betriebs der Druckluftzuführvorrichtung, und wobei
die Steuerungseinheit dazu ausgebildet ist, die Druckluftzuführvorrichtung dazu zu veranlassen, nach dem Etikettiervorgang der Behälter jeweils mehrere Druckluftstöße in jeden der Behälter auszuführen.

7. Behälterbehandlungsanlage, mit
einer Formblasvorrichtung zum Formen von Behältern aus Vorformlingen:
einer Etikettiervorrichtung gemäß einem der vorhergehenden Ansprüche, die stromabwärts von der Formblasvorrichtung angeordnet ist; und
einer Füllvorrichtung zum Füllen der Behälter, die stromabwärts von der Etikettiervorrichtung angeordnet ist.

8. Verfahren zur Bodennachkühlung von Behältern in einer Abfüllanlage, mit den Schritten
Transportieren der Behälter von einer Formblasvorrichtung der Abfüllanlage zu einer Etikettiervorrichtung der Abfüllanlage; und
Kühlen der Behälterböden der Behälter in der Etikettiervorrichtung durch Zuführen eines Gases zu den Behälterböden.

9. Das Verfahren gemäß Anspruch 8, weiterhin mit Transportieren der Behälter in der Etikettiervorrichtung auf Standtellern, wobei jeder der Standteller zumindest eine Öffnung aufweist, und wobei das Zuführen des Gases zu den Behälterböden durch die Öffnungen der Standteller erfolgt.

10. Das Verfahren gemäß Anspruch 9, wobei das Gas durch Ventilatoren den Behälterböden durch die Öffnungen der Standteller hindurch zugeführt wird.

11. Das Verfahren gemäß Anspruch 9, weiterhin mit Versetzen der Standteller in Drehung und wobei das Gas während der Drehung der Standteller durch fest mit den Standtellern verbundene Schaufelräder den Behälterböden durch die Öffnungen der Standteller hindurch zugeführt wird.

12. Das Verfahren gemäß Anspruch 8, weiterhin mit
Vorspannen der Behälter in der Etikettiervorrichtung mithilfe einer Druckluftzuführvorrichtung; und
Etikettieren der vorgespannten Behälter; und wobei
das Zuführen des Gases zu den Behälterböden das Ausführen von Druckluftstößen in jeden der etikettierten Behälter mithilfe der Druckluftzuführvorrichtung umfasst.

13. Das Verfahren gemäß einem der Ansprüche 8 bis 12, weiterhin mit Transportieren der Behälter von der Etikettiervorrichtung zu einer Füllvorrichtung der Abfüllanlage auf einer Transportstrecke und entweder mit Ausführen einer weiteren Bodennachkühlung der Behälter auf der Transportstrecke, insbesondere mit Wasser, oder ohne eine weitere Bodennachkühlung der Behälter auf der Transportstrecke.
